# EUROPÄISCHE PATENTSCHRIFT

(11) **EP 4 311 692 B1**
(45) Veröffentlichungstag und Bekanntmachung des Hinweises auf die Patenterteilung: **19.03.2025**
(21) Anmeldenummer: 23179650.9
(22) Anmeldetag: 16.06.2023
(51) Int. Cl.: B60C 13/02

(54) **FAHRZEUGREIFEN**
VEHICLE TYRE
BANDAGE PNEUMATIQUE POUR VÉHICULES

(30) Priorität: 25.07.2022 DE 102022207558
(43) Veröffentlichungstag der Anmeldung: 31.01.2024
(73) Patentinhaber: Continental Reifen Deutschland GmbH, 30175 Hannover (DE)
(72) Erfinder: Behr, Ulrich, 30165 Hannover (DE)
(74) Vertreter: Continental Corporation

(56) Entgegenhaltungen:
- EP-A1- 2 730 435
- EP-A1- 2 752 312
- DE-A1- 102010 036 765
- JP-A- 2010 274 886
- JP-A- 2014 015 182

## Beschreibung

Die Erfindung betrifft einen Fahrzeugreifen mit zumindest einem im Bereich zumindest einer Reifenschulter und/oder zumindest einer Reifenseitenwand ausgebildeten Strukturbereich mit einer eine insbesondere glatte Oberfläche aufweisenden Basisfläche, auf welcher eine Vielzahl von oberflächlichen, in Draufsicht kreisförmigen Vertiefungen ausgebildet ist.

Um den Verbrauch fossiler Brennstoffe und die Treibhausgasemissionen zu reduzieren, wurde in den letzten Jahren der Verringerung des Kraftstoffverbrauches von Fahrzeugen besondere Aufmerksamkeit geschenkt. Was Fahrzeugreifen betrifft, stehen vor allem Maßnahmen im Vordergrund, die eine Verringerung des Rollwiderstandes der Reifen bewirken. In letzter Zeit rücken jedoch auch die aerodynamischen Eigenschaften von Fahrzeugreifen und deren Beitrag zum Strömungswiderstand des Fahrzeuges, insbesondere bei Personenkraftwagen, mehr in den Vordergrund. Nachdem Fahrzeugreifen üblicherweise nicht vollständig von der Fahrzeugkarosserie umschlossen sind, werden auch die Reifenseitenwände und die Reifenschultern vom Fahrtwind umströmt und tragen zum aerodynamischen Gesamtprofil des jeweiligen Fahrzeuges bei. Insbesondere bei hohen Fahrgeschwindigkeiten des Fahrzeuges treten im Bereich der Seitenwände der Reifen hohe Umströmungsgeschwindigkeiten auf, die auf einen erhöhten Luftwiderstand, welcher sich auch auf den Treibstoffverbrauch des Fahrzeuges auswirkt, Einfluss nehmen. Die in üblicher Weise strukturierten Oberflächen der Reifenseitenwände beeinflussen beim Abrollen der Reifen das Entstehen von Turbulenzen und Abrissen der Luftströmung in der Grenzschicht, sodass je nach Ausgestaltung sogar der Luftwiderstand unerwünschter Weise erhöht sein kann.

Es ist bereits bekannt, Fahrzeugreifen mit speziell strukturierten Oberflächen an den Reifenseitenwänden zu versehen, um einen reduzierten Luftwiderstand zu erzielen. So ist beispielsweise aus der DE 10 2010 036 765 A1 ein Fahrzeugluftreifen mit einer Oberflächenstruktur auf den Reifenseitenwänden bekannt, welche als Netz von konzentrisch zur Reifenachse gekrümmt ausgebildeten gitterförmigen Strukturen ausgebildet ist, wobei die gitterförmigen Strukturen jeweils Oberflächenelemente unmittelbar eng umschließen und gegenüber den von ihnen umschlossenen Oberflächenelementen erhaben ausgebildet sind. Dieses engmaschige dichte Netz von konzentrisch zur Reifenachse gekrümmt ausgebildeten gitterförmigen Strukturen soll bei hoher Geschwindigkeit das Entstehen von Miniturbulenzen in der Grenzschicht der die Reifenseitenwandoberfläche umströmenden Luft in den Vertiefungen bewirken, sodass um derart die Abrisskanten der die Reifenseitenwandoberfläche umströmenden laminaren Strömung zu versetzen und den Luftwiderstand herabzusetzen. Ein weiterer Fahrzeugluftreifen, welcher den Luftwiderstand während der Rollbewegung verringern helfen soll, ist aus der DE 11 2014 000 477 T5 bekannt. Auf zumindest einem Bereich der Seitenwandoberfläche ist eine Vielzahl von Grübchen förmigen, insbesondere kreisrunden Vertiefungen ausgebildet, die periodisch in ihrer Größe entlang der Reifenumfangsrichtung variieren und in eine Hintergrundschraffur aus parallel zueinander verlaufenden Erhebungen eingebettet sind. Die kreisförmigen Vertiefungen weisen eine maximale Tiefe von 0,3 mm bis 1,5 mm auf. Ein weiterer Fahrzeugluftreifen mit strukturierten Oberflächenbereichen an den Reifenseitenwänden, die einen reduzierten Luftwiderstand bei guter Abriebfestigkeit der Struktur ermöglichen sollen, ist aus der WO 2013/010726 A1 bekannt. Dazu wird die Oberfläche zumindest einer der Seitenwände in zumindest einem Umfangsabschnitt mit in radialer Richtung und in Umfangsrichtung nebeneinander verteilt angeordneten ringförmigen und linienförmigen Strukturen versehen, wobei die linienförmigen Strukturen jeweils ein Oberflächenelement unmittelbar eng zumindest teilweise umschließen und linienförmige Vertiefungen bilden. Das derart gebildete engmaschige dichte Netz von ringförmigen, linienförmigen Vertiefungen, welche jeweils Oberflächenelemente unmittelbar eng umschließen, bewirkt bei hohen Geschwindigkeiten in der Grenzschicht der die Reifenseitenwandoberfläche umströmenden Luft das Entstehen von Miniturbulenzen, welche die Abrisskanten der die Reifenseitenwandoberfläche umströmenden laminaren Strömung versetzen und den Luftwiderstand herabsetzen sollen.

Es ist bekannt, dass das Dimplemuster auf der Oberfläche von Golfbällen den Strömungswiderstandskoeffizienten durch ein Absenken des Druckwiderstandes reduziert und auf diese Weise den Luftwiderstand von Golfbällen um bis zu 50 % verringern kann. Kleine Verwirbelungen innerhalb der Dimples verändern die laminare Grenzschicht um den Ball in eine turbulente Grenzschicht. Die Strömung löst sich verzögert ab, es herrscht ein Unterdruck. Je kleiner die Zone ist, desto geringer ist die Druckdifferenz zur Anströmseite und damit die Abbremsung in Flugrichtung.

Der Erfindung liegt die Aufgabe zugrunde, das von Golfbällen her bekannte Konzept der Dimplemuster auf eine innovative und besonders vorteilhafte Weise zur Reduktion des Luftwiderstandes auf Fahrzeugreifen zu übertragen.

Die gestellte Aufgabe wird erfindungsgemäß dadurch gelöst, dass jeweils zwei Vertiefungen paarweise über eine gegenüber dem Durchmesser der Vertiefungen verengte Verbindungsstelle miteinander verbunden sind und langgestreckte Strukturelemente bilden, die jeweils in Umfangsrichtung des Reifens orientiert sind.

Durch die Erfindung wird überraschenderweise eine aerodynamisch besonders voreilhafte Oberflächenstruktur an Reifenseitenwänden oder Reifenschultern zur Verfügung gestellt, welche den Strömungswiderstand des Fahrzeugreifens tatsächlich reduziert. Die in Drehrichtung des Reifens orientierten Strukturelemente wirken auf besonders effektive Weise bei höherer Fahrgeschwindigkeit bzw. unter höherer Rotation der Fahrzeugreifen als Turbulatoren, die eine laminare Grenzschicht in eine turbulente überführen, einen Strömungsabriss hinauszuzögern und somit ein längeres Anliegen der Strömung gewährleisten, was den Druckwiderstand verringert.

Diese Effekte werden durch bevorzugte Ausführungen und Ausgestaltungen der in Drehrichtung des Reifens orientierten Strukturelemente unterstützt und weiter verstärkt.

Besonders bevorzugt ist dabei eine Ausführung, bei welcher die Verbindungsstellen an der Basisfläche jeweils von zueinander nach innen gewölbten Rändern begrenzt sind, die jeweils tangential in die kreisförmig verlaufenden Ränder der Vertiefungen übergehen.

Die tangentialen Übergänge befinden sich bevorzugt jeweils am Endbereich der Endpunkte einer Kreissehne der kreisförmigen Ränder der Vertiefungen, wobei diese Kreissehnen eine Länge von 20% bis 70%, insbesondere von 30% bis 40%, des Durchmessers der Vertiefungen aufweisen.

Um in erwünschter Weise Miniturbulenzen bzw. Turbulatoren bei einer Rotation des Reifens zu erzeugen, ist es vorteilhaft, wenn die verengten Verbindungsstellen eine zwischen den Mittelpunkten der beiden Kreissehnen ermittelte Erstreckungslänge und in ihrer Mitte und zwischen den Rändern an der Basisfläche ermittelte geringste Breite von jeweils 15% bis 30% des Durchmessers der Vertiefungen aufweisen.

Die bis auf jene Stellen, wo die Verbindungen zwischen den beiden Vertiefungen angesetzt sind, kreisförmigen Vertiefungen weisen bevorzugt einen Durchmesser von 3,5 mm bis 6,0 mm und an ihrer tiefsten Stelle, bezogen auf das Niveau der Basisfläche, eine Tiefe von 0,3 mm bis 1,2 mm auf. Eine derartige Dimensionierung der Vertiefungen begünstigt eine aerodynamisch besonders vorteilhafte Oberflächenstruktur.

Aerodynamisch vorteilhaft sind ferner Vertiefungen, welche entweder einen in einer konstanten Tiefe befindlichen Boden und von diesem ausgehend eine am äußeren Rand verlaufende Randflanke aufweisen, die unter einem Winkel von 10° bis 45° in Richtung Boden und relativ zur Basisfläche geneigt ist, oder welche insgesamt als gerundete Mulden mit ihrer tiefsten Stelle im Mittelpunkt ihrer Kreisform ausgebildet sind.

Die verengten Verbindungsstellen sind vorteilhafterweise mit einem Boden versehen, welcher sich, bezogen auf das Niveau der Basisfläche, in einer Tiefe, die höchstens der größten Tiefe der Vertiefungen entspricht und zumindest 0,1 mm beträgt, erstreckt. Auch in den verengten Verbindungsstellen können vom Boden bis zu den Rändern Randflanken reichen, welche bevorzugt in Fortsetzung der vom Rand der Vertiefungen ausgehenden Randflanken verlaufen.

Als weitere, zusätzliche Maßnahmen, die dazu beitragen, den Druckwiderstand zu verringern, gehört eine Strukturierung des Bodens bzw. des inneren Bereiches der Vertiefungen. Bei einer diesbezüglich bevorzugten Ausführung ist am Boden der Vertiefungen und vorzugweise auch am Boden der verengten Verbindungsstellen jeweils zumindest eine Erhebung, insbesondere eine Vielzahl von kreuzungsfrei zueinander verlaufenden Erhebungen, ausgebildet.

Gemäß einer weiteren bevorzugten Ausführung ist bzw. sind die Erhebung(en) im Querschnitt trapezförmig, insbesondere gleichschenkelig trapezförmig, wobei, bei einer Vielzahl von Erhebungen, diese an ihrer Basis entweder unmittelbar aneinander anschließen oder unter einem gegenseitigen Abstand von insbesondere bis zu 0,8 mm verlaufen, und wobei die Erhebung(en) vorzugsweise derart gestaltet ist bzw. sind, dass sich ihre höchste Stelle(n) um mindestens 0,1 mm innerhalb des Niveaus der Basisfläche befindet bzw. befinden. Derart gestaltete Erhebungen lassen sich besonders gut mit auf herkömmlicher Weise mit eingefrästen Strukturen versehenen Vulkanisationsformteilen in die Reifenseitenwand bzw. Reifenschultern einprägen.

Es gibt eine Anzahl von Möglichkeiten, wirkungsvolle und gleichzeitig optisch ansprechende Erhebungen in den Vertiefungen auszubilden. Bei einer dieser Möglichkeiten sind mehrere parallel zueinander verlaufende Erhebungen am Boden der Vertiefungen ausgebildet, die ferner insbesondere geradlinig sowie bis zu den Rändern der Vertiefungen bzw. bis zu den Randflanken verlaufen. Bei einer alternativen Ausführung ist am Boden der Vertiefungen zumindest eine Erhebung ausgebildet, die entlang eines insbesondere konzentrisch zum äußeren Rand der Vertiefungen verlaufenden Kreises verläuft. Dabei können am Boden der Vertiefungen insbesondere zwei oder drei zueinander und zum Rand der Vertiefungen konzentrisch verlaufende Erhebungen ausgebildet sein. Diese Erhebungen können ferner, bezogen auf das Niveau der Basisfläche, in unterschiedlichen Höhen enden.

Weitere Merkmale, Vorteile und Einzelheiten der Erfindung werden nun anhand der Zeichnung, die Großteils schematisch Ausführungsbeispiele darstellt, näher beschrieben. Dabei zeigen
Fig. 1 schematisch einen Abschnitt einer Seitenansicht eines Fahrzeugreifens mit einer Seitenwand mit Strukturbereichen,
Fig. 2 ein Detail eines Strukturbereiches aus Fig. 1 in vergrößerter Darstellung,
Fig. 3 die Außenkontur eines Strukturelementes eines Strukturbereiches,
Fig. 4a und Fig. 4b eine Ausführungsvariante eines Strukturelementes, Fig. 4a in Draufsicht, Fig. 4b im vergrößerten Schnitt entlang der Linie IVb-IVb der Fig. 4a,
Fig. 5a und Fig. 5b eine weitere Ausführungsvariante eines Strukturelementes, Fig. 5a in Draufsicht, Fig. 5b im vergrößerten Schnitt entlang der Linie Vb-Vb der Fig. 5a,
Fig. 6a und Fig. 6b eine dritte Ausführungsvariante eines Strukturelementes, Fig. 6a in Schrägansicht, Fig. 6b im Schnitt entlang der Linie VIb-VIb der Fig. 6a und
Fig. 7a und Fig. 7b eine vierte Ausführungsvariante eines Strukturelementes, Fig. 7a in Schrägansicht, Fig. 7b im Schnitt entlang der Linie VIIb-VIIb der Fig. 7a.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

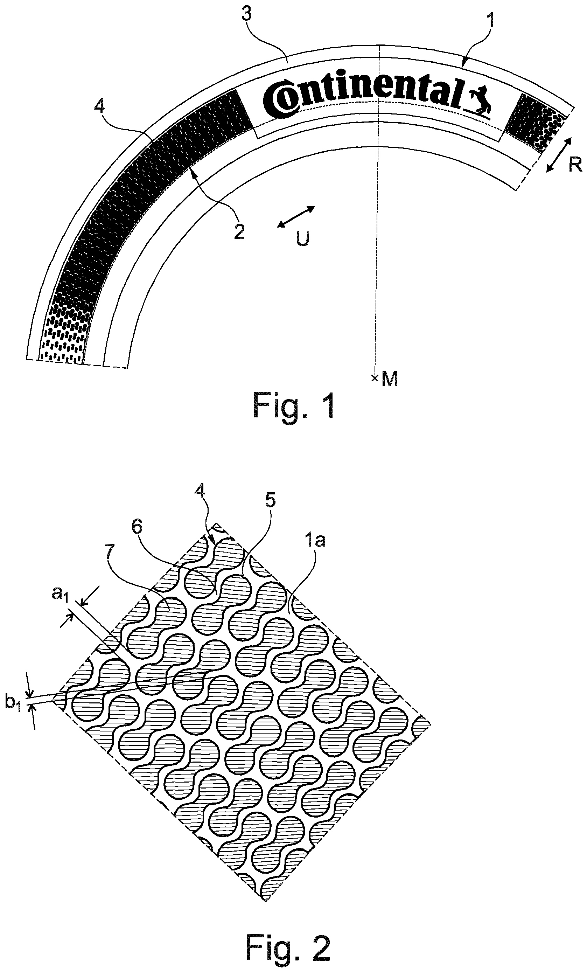

Fig. 1 zeigt einen Umfangsabschnitt der Seitenansicht eines Fahrzeugreifens mit einer Seitenwand 1 und einer in Richtung des nicht zu sehenden Laufstreifens des Fahrzeugreifens an diese anschließenden Reifenschulter 3. Die Seitenwand 1 ist in Draufsicht auf den Reifen ein Kreisring mit der Reifenachse als Mittelpunkt, gekennzeichnet mit M. In Fig. 1 ist ferner die radiale Richtung des Fahrzeugreifens mit dem Doppelpfeil R und die um die Reifenachse gerichtete Umfangsrichtung mit dem Doppelpfeil U bezeichnet.

Auf der Seitenwand 1 wechseln in Umfangsrichtung U als Strukturbereiche 2 ausgestaltete Umfangsabschnitte mit Umfangsabschnitten ab, in welchen auf beispielsweise unstrukturiertem, insbesondere glattem Untergrund als Erhebungen oder Vertiefungen ausgeführte Zeichen, wie Schriftzeichen, die einen Schriftzug bilden, oder Logos und dergleichen ausgebildet sind.

Fig. 1 zeigt einen Umfangsabschnitt eines Strukturbereiches 2, welcher sich in Umfangsrichtung der Seitenwand 1 bevorzugt über einen Kreisringabschnitt erstreckt, welcher in radialer Richtung R eine Breite aufweist, die je nach Reifendimension und Reifentyp in der Größenordnung von 1,5 cm bis 50,0 cm beträgt. In Umfangsrichtung verlaufen die Strukturbereiche 2 bevorzugt über Zentriwinkel von 5° bis 90°. Jeder Strukturbereich 2 weist eine mit einer glatten Oberfläche versehene Basisfläche 1a (Fig, 2) mit Strukturelementen 4 auf, die über einen Großteil der vom jeweiligen Strukturbereich 2 eingenommenen Fläche gleichmäßig verteilt angeordnet sind und derart insbesondere 50 % bis 80 % dieser Fläche einnehmen. Dabei kann, wie Fig. 1 zeigt, durch eine Verkleinerung der Strukturelemente 4 und Vergrößerung ihrer Abstände ein Übergangsbereich zu einem in Umfangsrichtung anschließenden, anders gestalteten Umfangsabschnitt geschaffen werden.

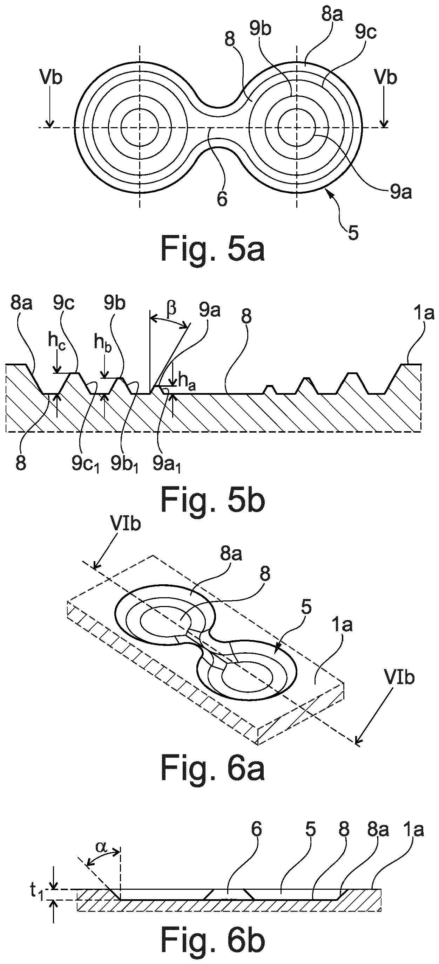

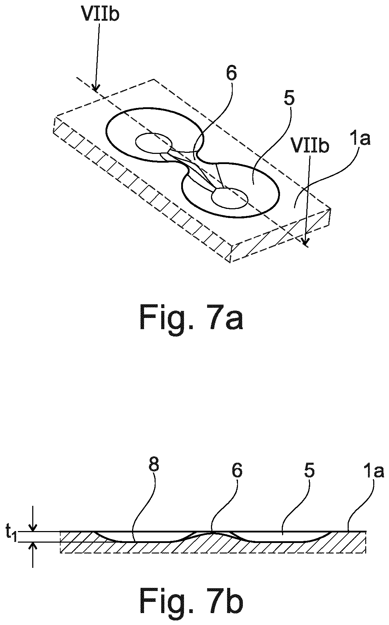

Wie beispielsweise Fig. 2, Fig. 3, Fig. 4a, Fig, 5a, Fig. 6a und Fig. 7a zeigen, sind die Strukturelemente 4 jeweils Paare von über eine Verbindungsstelle 6 - eine Engstelle - miteinander verbundene, von der Basisfläche 1a ausgehende, an der Basisfläche 1a von kreisförmig verlaufenden Rändern begrenzte, gemäß der bevorzugten Ausführung in Draufsicht übereinstimmend ausgeführten Vertiefungen 5 und auf diese Weise langgestreckt ausgeführt. Gemäß der in Fig. 1 und 2 gezeigten bevorzugten Ausführung verlaufen die Strukturelemente 4 in Umfangsrichtung U und innerhalb von Umfangsreihen unter gegenseitigen Abständen a₁ von vorzugsweise 1,0 mm bis 2,5 mm.

Die Strukturelemente 4, die in einander benachbarten Reihen angeordnet sind, sind jeweils in radialer Richtung gegeneinander versetzt, beispielsweise derart, dass, in radialer Richtung betrachtet, die eine Vertiefung 5 jedes Strukturelementes 4 einer Verbindungsstelle 6 aus der benachbarten Reihe von Strukturelementen 4 gegenüberliegt und die zweite Vertiefung 5 einem Abstand zwischen den in Umfangsrichtung U innerhalb einer Reihe verlaufenden Strukturelementen 4 zugeordnet ist. In Folge der gegenseitig versetzten Anordnung der Reihen von Strukturelementen 4 ergeben sich Zwischenräume zwischen den Vertiefungen 5 von Strukturelementen 4 in einander benachbarten Reihen mit einer Breite b₁ von insbesondere 1,0 mm bis 2,5 mm.

Fig. 2 zeigt die Außenkontur eines Strukturelementes 4 mit zwei, bis auf die Einmündungsstellen der Verbindungsstelle 6, kreisförmigen Vertiefungen 5 mit einem Durchmesser d, welcher 3,5 mm bis 6,0 mm, insbesondere in der Größenordnung von 5,0 mm beträgt. Die Verbindungsstelle 6 ist an der Basisfläche 1a von zueinander nach innen gewölbten Rändern begrenzt ist, welche jeweils im Bereich der Endpunkte einer Kreissehne s der Vertiefungen 5 tangential in die kreisförmig verlaufenden Ränder der Vertiefungen 5 übergehen. Die Kreissehnen s weisen eine Länge von 20% bis 70 %, insbesondere von 30% bis 40%, des Durchmessers der Vertiefungen 5 auf. In ihrer Mitte weisen die Verbindungsstellen 6 ihre schmalste Stelle mit einer Breite b₂ auf, die 15% bis 30% des Durchmessers d der Vertiefungen 5 beträgt, insbesondere 0,5 mm bis 2,0 mm.

Die zwischen den Mittelpunkten der beiden Kreissehnen s ermittelte Erstreckungslänge e der Verbindungsstellen 6 beträgt 15% bis 30% des Durchmessers d, vorzugsweise in der Größenordnung von 0,5 mm bis 1,5 mm, sodass die Strukturelemente 4 eine Erstreckungslänge I von vorzugsweise 8,5 mm bis 13,5 mm aufweisen.

Bevorzugte Ausführungen der Ausgestaltung der Vertiefungen 5 der Strukturelemente 4 werden nun anhand der weiteren Figuren beschrieben.

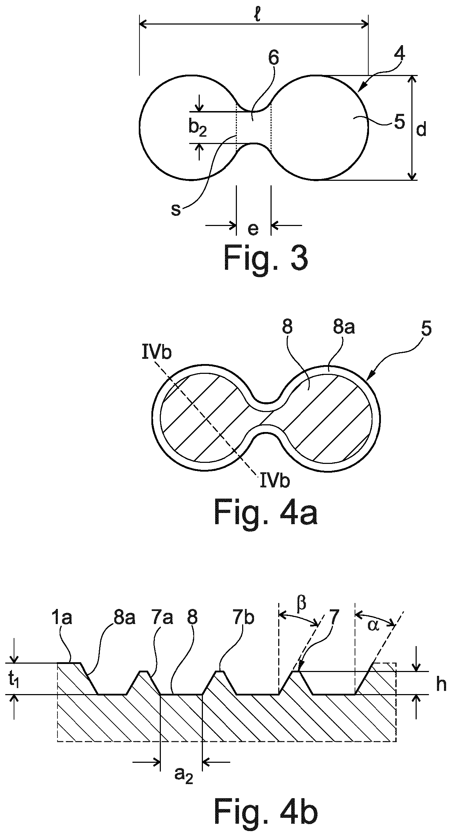

Bei den in Fig. 4a und Fig. 4b, Fig. 5a und Fig. 5b sowie in Fig. 6a und 6b gezeigten Ausführungsvarianten weisen die Vertiefungen 5 und die Verbindungsstelle 6 jeweils einen durchgehenden und auf einem konstanten Niveau bzw. in einer konstanten Tiefe t₁ von 0,3 mm bis 1,2 mm befindlichen Boden 8 und zwischen dem Bodenrand und dem äußeren Rand des Strukturelementes 4 eine Randflanke 8a auf, die unter einem Winkel α einwärts geneigt ist, wobei α zu einer Senkrechten auf den Boden 8 betrachtet 10° bis 45° beträgt.

Bei der in Fig. 4a und 4b gezeigten Ausführungsvariante ist am Boden 8 der Vertiefungen 5 und der Verbindungsstelle 6 eine Vielzahl von parallel zueinander verlaufenden Erhebungen 7 ausgebildet, die in Fig. 4a lediglich mit Linien angedeutet sind und jeweils bis zu den Randflanken 8a verlaufen. Wie Fig. 4b vergrößert zeigt weisen die Erhebungen 7 beispielsweise eine insbesondere gleichschenkelig trapezförmige Querschnittsfläche und übereinstimmende Höhen h von 0,3 mm bis 1,0 mm, wobei h um mindestens 0,1 mm geringer ist als die Tiefe t₁, sodass die Erhebungen 7 die Vertiefungen 5 nicht überragen. Die eine Schraffur bildenden Erhebungen 7 weisen Seitenflanken 7a auf, die relativ zu einer Senkrechten auf den Boden 8 bevorzugt unter übereinstimmend großen Winkeln β geneigt sind, wobei β 10° bis 45° beträgt. In Folge Ihrer Trapezform besitzen die Erhebungen 7 schmale Plateauflächen 7b mit einer insbesondere konstanten Breite in der Größenordnung von 0,15 mm. An ihrer Basis am Boden 8 der Vertiefungen 5 können die Erhebungen 7 unmittelbar aneinander anschließen oder, wie in Fig. 4b gezeigt, einen gegenseitigen Abstand a₂ von 0,2 mm bis 1,0 mm aufweisen.

Bei der in Fig. 5a und 5b gezeigten Ausführungsvariante sind am Boden 8 der Vertiefungen 5 mehrere, bei der gezeigten Ausführung drei, konzentrisch zueinander und konzentrisch zum äußeren Rand der Vertiefungen 5 verlaufende, in Fig. 5a durch Linien angedeutete Erhebungen 9a, 9b und 9c ausgebildet, wobei die Erhebung 9a die innerste und die Erhebung 9c die äußerste Erhebung ist. Gegenüber dem Niveau des Bodens 8 besitzen die Erhebungen 9a, 9b und 9c bei der gezeigten Ausführung unterschiedliche Höhen hₐ, h_{b} und h_{c}, wobei die innerste Erhebung 9a die geringste Höhe hₐ und die äußerste Erhebung 9c die größte Höhe h_{c} aufweist. Die Höhe der hₐ der innersten Erhebung 9a beträgt 0,1 mm bis 0,3 mm, die Höhe h_{b} der benachbarten Erhebung 9b beträgt 0,2 mm bis 0,6 mm, die Höhe h_{c} der äußersten Erhebung 9c 0,3 mm bis 0,9 mm, wobei die Erhebungen 9a, 9b und 9c den äußeren Rand der Vertiefung 5 nicht überragen. Die Erhebungen 9a, 9b und 9c können auch übereinstimmende Höhen von 0,1mm bis 0,9 mm aufweisen. Ansonsten sind die Erhebungen 9a, 9b und 9c analog zu den Erhebungen 7 im Querschnitt gleichschenkelig trapezförmig gestaltet, mit Seitenflanken 9a₁, 9b₁ und 9c₁, die relativ zu einer Senkrechten auf den Boden 8 bevorzugt unter übereinstimmend großen Winkeln β von 10° bis 45° geneigt sind und mit schmalen, hier ringförmig umlaufende Plateauflächen mit einer insbesondere konstanten Breite in der Größenordnung von 0,15 mm. Am Boden 8, demnach an der Basis schließen die Erhebungen 9a, 9b und 9c unmittelbar aneinander an, alternativ weisen die Erhebungen 9a, 9b und 9c einen gegenseitiger Abstand a₂ von bis zu 1,0 mm auf.

Fig. 6a mit Fig. 6b sowie Fig. 7a mit Fig. 7b zeigen weitere Ausführungsvarianten von paarweise miteinander verbundenen Vertiefungen 5. Bei der in Fig. 6a und Fig. 6b gezeigten Ausführung weisen die Vertiefungen 5 einen kreisförmigen Boden 8 auf konstantem Niveau, also in einer Tiefe t₁ von 0,30 mm bis 1,2 mm auf, die Tiefe der Verbindungsstelle 6 ist an die Tiefe des Bodens 8 angepasst. Am Boden 8 sind keine Erhebungen ausgebildet. Vom Boden 8 zu den Außenrändern der Vertiefungen 5 und der Verbindungsstelle 6 verläuft durchgehend eine Randflanke 8a relativ zum Boden 8 unter dem bereits erwähnten Neigungswinkel α.

Bei der in Fig. 7a und Fig. 7b gezeigten Ausführungsform sind die Vertiefungen 5 insgesamt gerundete Mulden mit einem muldenförmigen Boden 8 und ihrer tiefsten Stelle mit der Tiefe t₁ im Bereich des Mittelpunktes ihrer Kreisform. Die Verbindungsstelle 6 ist eine lokale seichtere Verengung zwischen den beiden Vertiefungen 5. Auch bei der Ausführung gemäß Fig. 7a mit Fig. 7b können auf analoge Weise wie beschrieben Erhebungen am Boden 8 vorhanden sein.

Reifen mit gemäß der Erfindung gestalteten Strukturbereichen werden in einer Vulkanisationsform vulkanisiert, welche zur Ausbildung dieser Strukturbereiche im Bereich der Reifenschultern und/oder Reifenseitenwände entsprechende eingeprägte Strukturen, komplementär zu den Strukturbereichen und Strukturelementen ausgeführt, aufweisen. Die betreffenden Bestandteile der Vulkanisationsform sind daher Seitenschalen zur Ausbildung der Seitenwände und die schulterseitigen Bereiche von Profilsegmenten, welche die Laufstreifenprofilierung des Fahrzeugreifens einprägen. Die Strukturen werden vorzugweise mit einem materialabtragenden Verfahren, beispielsweise mittels eines Fräswerkzeuges, hergestellt.

### Bezugszeichenliste

- 1: Seitenwand
- 1a: Basisfläche
- 2: Strukturbereich
- 3: Reifenschulter
- 4: Strukturelement
- 5: Vertiefung
- 6: Verbindungsstelle
- 7: Erhebung
- 7a: Seitenflanke
- 7b: Plateaufläche
- 8: Boden
- 8a: Randflanke
- 9a, 9b, 9c: Erhebung
- 9a₁, 9b₁, 9c₁: Seitenflanke
- α, β: Winkel
- a₁, a₂: Abstand
- b₁, b₂: Breite
- d: Durchmesser
- e, l: Erstreckungslänge
- h, hₐ, h_{b}, h_{c}: Höhe
- R: radiale Richtung
- s: Kreissehne
- t₁: Tiefe
- U: Umfangsrichtung

## Patentansprüche

1. Fahrzeugreifen mit zumindest einem im Bereich zumindest einer Reifenschulter (3) und/oder zumindest einer Reifenseitenwand (1) ausgebildeten Strukturbereich (2) mit einer eine insbesondere glatte Oberfläche aufweisenden Basisfläche (1a), auf welcher eine Vielzahl von oberflächlichen, in Draufsicht kreisförmigen Vertiefungen (5) ausgebildet ist,
**dadurch gekennzeichnet,**
**dass** jeweils zwei Vertiefungen (5) paarweise über eine gegenüber dem Durchmesser der Vertiefungen (5) verengte Verbindungstelle (6) miteinander verbunden sind und langgestreckte Strukturelemente (4) bilden, die jeweils in Umfangsrichtung des Reifens orientiert sind.

2. Fahrzeugreifen nach Anspruch 1, **dadurch gekennzeichnet, dass** die verengten Verbindungstellen (6) an der Basisfläche (1a) jeweils von zueinander nach innen gewölbten Rändern begrenzt sind, welche jeweils tangential in die kreisförmig verlaufenden Ränder der Vertiefungen (5) übergehen.

3. Fahrzeugreifen nach Anspruch 1 oder 2, **dadurch gekennzeichnet, dass** die verengten Verbindungsstellen (6) jeweils im Bereich der Endpunkte einer Kreissehne (s) der kreisförmigen Ränder der Vertiefungen (5) tangential in die kreisförmig verlaufenden Ränder der Vertiefungen (5) übergehen, wobei die Kreissehnen (s) eine Länge von 20% bis 70 %, insbesondere von 30% bis 40%, des Durchmessers (d) der Vertiefungen (5) aufweisen.

4. Fahrzeugreifen nach Anspruch 3, **dadurch gekennzeichnet, dass** die verengten Verbindungsstellen (6) eine zwischen den Mittelpunkten der beiden Kreissehnen (s) ermittelte Erstreckungslänge (e) von 15% bis 30% des Durchmessers (d) der Vertiefungen (5) aufweisen.

5. Fahrzeugreifen nach einem oder mehreren der Ansprüche 1 bis 4, **dadurch gekennzeichnet, dass** die verengten Verbindungsstellen (6), in ihrer Mitte und zwischen ihren Rändern an der Basisfläche (1a) ermittelt, ihre geringste Breite (b₂) von 15% bis 30% des Durchmessers (d) der Vertiefungen (5) aufweisen.

6. Fahrzeugreifen nach einem oder mehreren der Ansprüche 1 bis 5, **dadurch gekennzeichnet, dass** die Vertiefungen (5) einen Durchmesser von 3,5 mm bis 6,0 mm und an ihrer tiefsten Stelle, bezogen auf das Niveau der Basisfläche (1a), eine Tiefe (t₁) von 0,3 mm bis 1,2 mm aufweisen.

7. Fahrzeugreifen nach einem oder mehreren der Ansprüche 1 bis 6, **dadurch gekennzeichnet, dass** die Vertiefungen (5) einen in einer konstanten Tiefe (t₁) befindlichen, kreisförmigen Boden (8) und eine von ihrem äußeren, kreisförmig verlaufenden Rand bis zum Boden (8) reichende Randflanke (8a) aufweisen, die unter einem Winkel (α) von 10° bis 45° in Richtung Boden (8) geneigt ist.

8. Fahrzeugreifen nach einem oder mehreren der Ansprüche 1 bis 7, **dadurch gekennzeichnet, dass** die verengten Verbindungstellen (6) einen Boden (8) aufweisen, welcher sich, bezogen auf das Niveau der Basisfläche (1a), in einer Tiefe, die höchsten der größten Tiefe (t₁) der Vertiefungen (5) entspricht und zumindest 0,1 mm beträgt, erstreckt.

9. Fahrzeugreifen nach einem oder mehreren der Ansprüche Anspruch 1 bis 8, **dadurch gekennzeichnet, dass** von den Rändern der verengten Verbindungsstellen (6) in Richtung ihres Bodens (8) Randflanken (8a) ausgehen, welche in Fortsetzung der vom Rand der Vertiefungen (5) ausgehenden Randflanken (8a) verlaufen.

10. Fahrzeugreifen nach einem oder mehreren der Ansprüche 1 bis 9, **dadurch gekennzeichnet, dass** die Vertiefungen (5) insgesamt muldenförmig mit einem muldenförmigen Boden (8) ausgebildet sind.

11. Fahrzeugreifen nach einem oder mehreren der Ansprüche 1 bis 10, **dadurch gekennzeichnet, dass** am Boden (8) der Vertiefungen (5) und vorzugsweise auch am Boden (8) der verengten Verbindungsstellen (6) jeweils zumindest eine Erhebung (7, 9a, 9b, 9c), insbesondere eine Vielzahl von kreuzungsfrei zueinander verlaufenden Erhebungen (7, 9a, 9b, 9c), ausgebildet ist.

12. Fahrzeugreifen nach Anspruch 11, **dadurch gekennzeichnet, dass** die Erhebung(en) (7, 9a, 9b, 9c) im Querschnitt trapezförmig, insbesondere gleichschenkelig trapezförmig ist bzw. sind und, bei einer Vielzahl von Erhebungen (7, 9a, 9b, 9c), an ihrer Basis entweder unmittelbar aneinander anschließen oder unter einem gegenseitigen Abstand (a₂) von insbesondere bis zu 1,0 mm verlaufen, wobei die Erhebung(en) (7, 9a, 9b, 9c) vorzugsweise derart gestaltet ist bzw. sind, dass sich ihre höchste Stelle um mindestens 0,1 mm innerhalb des Niveaus der Basisfläche (1a) befindet.

13. Fahrzeugreifen nach Anspruch 11 oder 12, **dadurch gekennzeichnet, dass** die Erhebungen (7) parallel zueinander und insbesondere geradlinig sowie bis zu den Rändern der Vertiefungen (5) oder bis zu den Randflanken (8a) verlaufen.

14. Fahrzeugreifen nach Anspruch 11 oder 12, **dadurch gekennzeichnet, dass** am Boden (8) der Vertiefungen (5) zumindest eine Erhebung (9a, 9b, 9c) ausgebildet ist, die entlang eines insbesondere konzentrisch zum äußeren Rand der Vertiefungen (5) verlaufenden Kreises verläuft.

15. Fahrzeugreifen nach Anspruch 14, **dadurch gekennzeichnet, dass** am Boden (8) der Vertiefungen (5) zwei oder drei zueinander und zum Rand der Vertiefungen konzentrisch verlaufende Erhebungen (9a, 9b, 9c) ausgebildet sind.

## Claims

1. Vehicle tyre with at least one structural region (2) which is formed in the region of at least one tyre shoulder (3) and/or at least one tyre sidewall (1) and has a base area (1a) which has an in particular smooth surface and on which a multiplicity of superficial depressions (5) which are circular when seen from above are formed,
**characterized**
**in that** two depressions (5) in each case are connected to one another in pairs by way of a connecting point (6) that is narrowed in comparison with the diameter of the depressions (5) and form elongated structural elements (4), which are in each case oriented in the circumferential direction of the tyre.

2. Vehicle tyre according to Claim 1, **characterized in that** the narrowed connecting points (6) on the base area (1a) are each delimited by peripheries which are curved inwardly relative to one another and in each case tangentially transition into the circularly extending peripheries of the depressions (5).

3. Vehicle tyre according to Claim 1 or 2, **characterized in that** the narrowed connecting points (6) in each case in the region of the end points of a chord (s) of the circular peripheries of the depressions (5) tangentially transition into the circularly extending peripheries of the depressions (5), wherein the chords (s) have a length of 20% to 70%, in particular of 30% to 40%, of the diameter (d) of the depressions (5).

4. Vehicle tyre according to Claim 3, **characterized in that** the narrowed connecting points (6) have a length of extent (e), determined between the centres of the two chords (s), of 15% to 30% of the diameter (d) of the depressions (5).

5. Vehicle tyre according to one or more of Claims 1 to 4, **characterized in that** the narrowed connecting points (6) have, determined in their middle and between their peripheries at the base area (1a), their smallest width (b₂) of 15% to 30% of the diameter (d) of the depressions (5).

6. Vehicle tyre according to one or more of Claims 1 to 5, **characterized in that** the depressions (5) have a diameter of 3.5 mm to 6.0 mm and at their lowest point, in relation to the level of the base area (1a), a depth (t₁) of 0.3 mm to 1.2 mm.

7. Vehicle tyre according to one or more of Claims 1 to 6, **characterized in that** the depressions (5) have a circular base (8) at a constant depth (t₁) and a peripheral flank (8a) which extends from its outer, circularly extending periphery to the base (8) and is inclined towards the base (8) at an angle (α) of 10° to 45°.

8. Vehicle tyre according to one or more of Claims 1 to 7, **characterized in that** the narrowed connecting points (6) have a base (8) which, in relation to the level of the base area (1a), extends at a depth which corresponds at most to the greatest depth (t₁) of the depressions (5) and is at least 0.1 mm.

9. Vehicle tyre according to one or more of Claims 1 to 8, **characterized in that** peripheral flanks (8a) run from the peripheries of the narrowed connecting points (6) towards their base (8) and extend in the continuation of the peripheral flanks (8a) that run from the periphery of the depressions (5).

10. Vehicle tyre according to one or more of Claims 1 to 9, **characterized in that** the depressions (5) are overall in the form of hollows with a hollow-like base (8).

11. Vehicle tyre according to one or more of Claims 1 to 10, **characterized in that**, at the base (8) of the depressions (5) and preferably also at the base (8) of the narrowed connecting points (6), in each case at least one elevation (7, 9a, 9b, 9c), in particular a multiplicity of elevations (7, 9a, 9b, 9c) that extend relative to one another without intersecting, are formed.

12. Vehicle tyre according to Claim 11, **characterized in that** the elevation(s) (7, 9a, 9b, 9c) in cross section is or are in the form of a trapezium, in particular in the form of an isosceles trapezium, and, in the case of a multiplicity of elevations (7, 9a, 9b, 9c), at their base either adjoin one another directly or extend at a mutual distance (a₂) of in particular up to 1.0 mm, wherein the elevation(s) (7, 9a, 9b, 9c) is or are preferably designed in such a way that their highest point is at least 0.1 mm within the level of the base area (1a).

13. Vehicle tyre according to Claim 11 or 12, **characterized in that** the elevations (7) extend parallel to one another, and in particular rectilinearly, and up to the peripheries of the depressions (5) or up to the peripheral flanks (8a).

14. Vehicle tyre according to Claim 11 or 12, **characterized in that** at least one elevation (9a, 9b, 9c) is formed at the base (8) of the depressions (5) and extends along a circle that extends in particular concentrically with respect to the outer periphery of the depressions (5).

15. Vehicle tyre according to Claim 14, **characterized in that** two or three elevations (9a, 9b, 9c) that extend concentrically with respect to one another and to the periphery of the depressions are formed at the base (8) of the depressions (5).

## Revendications

1. Pneumatique de véhicule avec au moins une zone de structure (2) réalisée dans la zone d'au moins un épaulement de pneumatique (3) et/ou d'au moins une paroi latérale de pneumatique (1) avec une surface de base (1a) présentant une surface notamment lisse, sur laquelle est réalisée une pluralité de creux (5) superficiels, circulaires en vue de dessus,
**caractérisé**
**en ce que** respectivement deux creux (5) sont reliés entre eux par paires par l'intermédiaire d'un point de liaison (6) rétréci par rapport au diamètre des creux (5) et forment des éléments de structure (4) allongés qui sont orientés respectivement dans la direction circonférentielle du pneu.

2. Pneumatique de véhicule selon la revendication 1, **caractérisé en ce que** les points de liaison rétrécis (6) sont délimités sur la surface de base (1a) respectivement par des bords bombés vers l'intérieur l'un par rapport à l'autre, qui se prolongent respectivement tangentiellement dans les bords s'étendant de manière circulaire des creux (5).

3. Pneumatique de véhicule selon la revendication 1 ou 2, **caractérisé en ce que** les points de liaison rétrécis (6) se prolongent respectivement tangentiellement dans la zone des points d'extrémité d'une corde de cercle (s) des bords circulaires des creux (5) dans les bords s'étendant de manière circulaire des creux (5), les cordes de cercle (s) présentant une longueur de 20 % à 70 %, notamment de 30 % à 40 %, du diamètre (d) des creux (5).

4. Pneumatique de véhicule selon la revendication 3, **caractérisé en ce que** les points de liaison rétrécis (6) présentent une longueur d'extension (e), déterminée entre les centres des deux cordes de cercle (s), de 15 % à 30 % du diamètre (d) des creux (5).

5. Pneumatique de véhicule selon une ou plusieurs des revendications 1 à 4, **caractérisé en ce que** les points de liaison rétrécis (6) présentent leur largeur minimale (b₂), déterminée en leur centre et entre leurs bords sur la surface de base (1a), de 15 % et 30 % du diamètre (d) des creux (5).

6. Pneumatique de véhicule selon une ou plusieurs des revendications 1 à 5, **caractérisé en ce que** les creux (5) présentent un diamètre de 3,5 mm à 6,0 mm et, à leur point le plus profond, par rapport au niveau de la surface de base (1a), une profondeur (t₁) de 0,3 mm à 1,2 mm.

7. Pneumatique de véhicule selon une ou plusieurs des revendications 1 à 6, **caractérisé en ce que** les creux (5) présentent un fond circulaire (8) se trouvant à une profondeur constante (t₁) et un flanc de bord (8a) s'étendant depuis leur bord extérieur s'étendant de manière circulaire jusqu'au fond (8), qui est incliné d'un angle (α) de 10° à 45° en direction du fond (8).

8. Pneumatique de véhicule selon une ou plusieurs des revendications 1 à 7, **caractérisé en ce que** les points de liaison rétrécis (6) présentent un fond (8) qui s'étend, par rapport au niveau de la surface de base (1a), à une profondeur correspondant à la plus grande profondeur (t₁) des creux (5) et qui est d'au moins 0,1 mm.

9. Pneumatique de véhicule selon une ou plusieurs des revendications 1 à 8, **caractérisé en ce que** des flancs de bord (8a) partent des bords des points de liaison rétrécis (6) en direction de leur fond (8), lesquels s'étendant dans le prolongement des flancs de bord (8a) partant du bord des creux (5).

10. Pneumatique de véhicule selon une ou plusieurs des revendications 1 à 9, **caractérisé en ce que** les creux (5) sont globalement réalisés en forme d'auge avec un fond (8) en forme d'auge.

11. Pneumatique de véhicule selon une ou plusieurs des revendications 1 à 10, **caractérisé en ce qu'**au moins un bossage (7, 9a, 9b, 9c), notamment une pluralité de bossages (7, 9a, 9b, 9c) s'étendant les uns par rapport aux autres sans se croiser, est formé sur le fond (8) des creux (5) et de préférence également sur le fond (8) des points de liaison rétrécis (6).

12. Pneumatique de véhicule selon la revendication 11, **caractérisé en ce que** le ou les bossages (7, 9a, 9b, 9c) sont de forme trapézoïdale dans la section transversale, notamment de forme trapézoïdale isocèle, et, dans le cas d'une pluralité de bossages (7, 9a, 9b, 9c), soit se raccordent directement les uns aux autres à leur base, soit s'étendent à une distance mutuelle (a₂), notamment de jusqu'à 1,0 mm, le ou les bossages (7, 9a, 9b, 9c) étant de préférence configurés de telle sorte que leur point le plus haut se trouve à au moins 0,1 mm à l'intérieur du niveau de la surface de base (1a).

13. Pneumatique de véhicule selon la revendication 11 ou 12, **caractérisé en ce que** les bossages (7) s'étendent parallèlement les uns aux autres et notamment de manière rectiligne ainsi que jusqu'aux bords des creux (5) ou jusqu'aux flancs de bord (8a).

14. Pneumatique de véhicule selon la revendication 11 ou 12, **caractérisé en ce qu'**au moins un bossage (9a, 9b, 9c) est réalisé sur le fond (8) des creux (5), lequel s'étend le long d'un cercle s'étendant notamment de manière concentrique par rapport au bord extérieur des creux (5).

15. Pneumatique de véhicule selon la revendication 14, **caractérisé en ce que** deux ou trois bossages (9a, 9b, 9c) s'étendant de manière concentrique les uns par rapport aux autres et par rapport au bord des creux (5) sont réalisés sur le fond (8) des creux.
